# EUROPÄISCHE PATENTSCHRIFT

(11) **EP 3 957 151 B1**
(45) Veröffentlichungstag und Bekanntmachung des Hinweises auf die Patenterteilung: **28.01.2026**
(21) Anmeldenummer: 21181148.4
(22) Anmeldetag: 23.06.2021
(51) Int. Cl.: A01D 34/23

(54) **SEITENSCHNEIDWERK**
SIDE CUTTING GEAR
COUPE LATÉRALE

(30) Priorität: 19.08.2020 DE 102020121773
(43) Veröffentlichungstag der Anmeldung: 23.02.2022
(73) Patentinhaber: CLAAS Selbstfahrende Erntemaschinen GmbH, 33428 Harsewinkel (DE)
(72) Erfinder: Dudler, Heribert, 33428 Harsewinkel (DE); Köckemann, Josef, 33442 Herzebrock-Clarholz (DE); Tiemann, Robert, 32139 Spenge (DE); Eidhoff, Lukas, 33332 Gütersloh (DE)
(74) Vertreter: CLAAS Gruppe

(56) Entgegenhaltungen:
- EP-B1- 2 407 019
- DE-A1- 3 139 601
- DE-C2- 3 139 601
- DE-U1- 202016 100 325
- FR-A1- 2 805 123

## Beschreibung

Die Erfindung betrifft ein Seitenschneidwerk für ein Schneidwerk einer landwirtschaftlichen Erntemaschine nach dem Oberbegriff des Anspruchs 1.

Aus dem Stand der Technik ist es hinlänglich bekannt Getreideschneidwerke, die üblicher Weise von sogenannten Mähdreschern aufgenommen werden, mit Seitenschneidwerken auszustatten. Derartige Seitenschneidwerke haben die Funktion, den von dem jeweiligen Getreideschneidwerk zu erntenden Getreidebestand so in vertikaler Richtung freizuschneiden, dass die Schneid- und Förderorgane des Getreideschneidwerks den abzuerntenden Bestand problemlos schneiden und abfördern können. Insbesondere werden derartige Seitenschneidwerke bei der Ernte von Raps eingesetzt, da erntereife Rapspflanzen untereinander extrem verschlungen sind. Üblicher Weise werden Seitenschneidwerke entweder beidseitig oder nur einseitig an dem jeweiligen Getreideschneidwerke adaptiert.

Typischer Weise sind Seitenschneidwerke so aufgebaut, dass gegeneinander oszillierende Trennmesser von einer Balkenstruktur, einer sogenannten Balkenschiene, aufgenommen werden. Beispielseise sind aus DE 31 39 601 C2 und EP 2 407 019 B1 Balkenschienenstrukturen bekannt geworden, die sich aus einer Kastenprofilstruktur zur Schaffung der notwendigen Stabilität des Seitenschneidwerks und einer stegartigen Struktur zur Aufnahme der oszillierenden Trennmesser zusammensetzen. Derartige Balkenschienenstrukturen haben den Nachteil, dass sie eine große Querausdehnung aufweisen, die einerseits schneidkraftbedingt hohe Biegemomente in die Kastenprofilstruktur einleiten und zum anderen eine extrem hohe Masse aufweisen.

Dem Nachteil der verformungsanfälligen stegartigen Struktur entgegenzuwirken ist es auch bekannt, wie etwa in der EP 2 647 276 gezeigt, auf die stegartige Struktur zu verzichten und die oszillierenden Trennmesser über Haltelaschen direkt an der Kastenprofilstruktur lösbar zu befestigen.

Auch derartige Strukturen haben den Nachteil, dass die Schneidkräfte über einen langen Hebelarm in die Kastenstruktur eingeleitet werden müssen, sodass die jeweilige Kastenstruktur extrem stabil ausgelegt werden muss, was letztlich wieder die Masse des gesamten Seitenschneidwerks deutlich erhöht.

Es ist deshalb Aufgabe der Erfindung die beschriebenen Nachteile des Standes der Technik zu vermeiden und insbesondere eine Seitenmesserstruktur zu schaffen, die eine kompakte Bauweise aufweist, die eine niedrigere Gesamtmasse des jeweiligen Seitenschneidwerks ermöglicht.

Diese Aufgabe wird erfindungsgemäß durch die kennzeichnenden Merkmale des Anspruchs 1 gelöst.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
Figur 1 eine schematische Darstellung des erfindungsgemäßen Seitenschneidwerks
Figuren 2a,2b Detailansichten des Seitenschneidwerks nach Figur 1
Figuren 3a-d Detailansichten der erfindungsgemäßen Balkenschiene

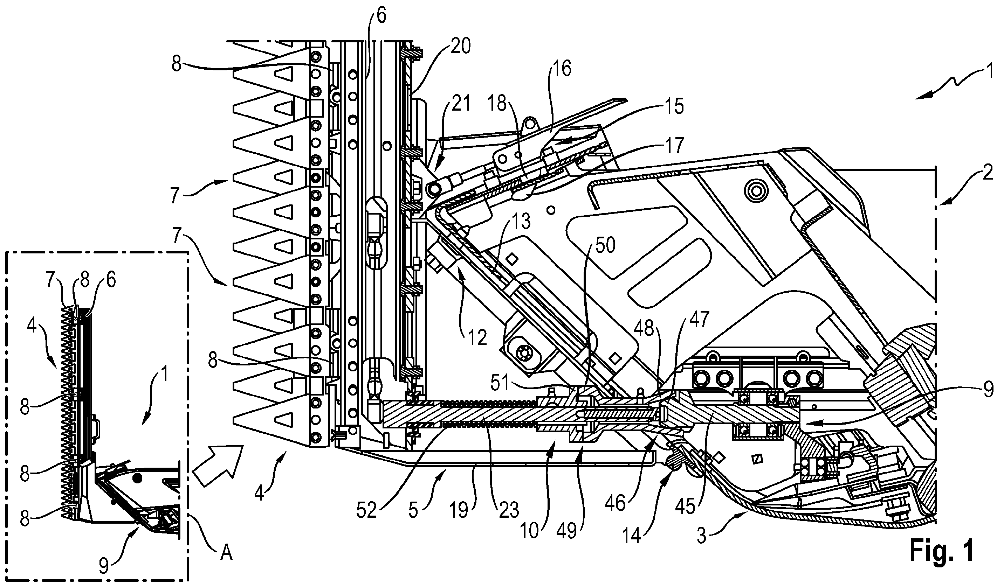

In Fig. 1 ist schematisch und exemplarisch eine Teilansicht eines Schneidwerks 1 mit zumindest einem daran angeordneten Seitenschneidwerk 4 dargestellt. Das Schneidwerk 1 wird von einer - nicht dargestellten - landwirtschaftlichen Erntemaschine, vorzugsweise einem Mähdrescher aufgenommen und durch diesen angetrieben. Hierzu wird das Schneidwerk 1 mit einem mechanischen Antriebsstrang des Mähdreschers gekoppelt. Zudem kann eine Anbindung des Schneidwerks 1 an ein Hydrauliksystem des Mähdreschers vorgesehen sein, um Komponenten des Schneidwerks 1, wie beispielsweise eine Haspel, hydraulisch anzutreiben. Das Schneidwerk 1 umfasst einen Rahmen 2 und eine daran angeordnete Schneidwerksmulde. In an sich bekannter und daher nicht dargestellter Weise ist der Schneidwerksmulde ein Schneidtisch vorgeordnet und die Haspel ist mittels Tragarmen an der Schneidwerksmulde geführt und gegenüber dieser in oder entgegen einer Mährichtung verstellbar. An dem Schneidtisch ist ein oszillierend angetriebener Messerbalken 3 angeordnet.

Das zumindest eine Seitenschneidwerk 4 ist endseitig an dem Rahmen 2 lösbar angeordnet. Das Seitenschneidwerk 4 erstreckt sich im Wesentlichen vertikal zu dem Messerbalken 3. Das Seitenschneidwerk 4 umfasst eine an einem Tragrahmen 5 angeordnete erfindungsgemäße und im Folgenden noch näher zu beschreibende Balkenschiene 6. Das Seitenschneidwerk 4 ist mittels des Tragrahmens 5 lösbar an dem Rahmen 2 des Schneidwerks 1 anbringbar. Die Balkenschiene 6 stützt in noch näher zu beschreibender Weise in Längsrichtung zumindest ein oszillierend angetriebenes Trennmesser 7 mittels Messerhalteeinrichtungen 8 ab. Im dargestellten Ausführungsbeispiel sind zwei Trennmesser 7 parallel zueinander angeordnet. An zumindest einem äußeren Ende des Messerbalkens 3 ist ein Abtrieb 9 angeordnet, der die oszillierende Antriebsbewegung des Messerbalkens 3 aufnimmt. Im Fall von beidseitig am Rahmen 2 des Schneidwerks 1 angeordneten Seitenschneidwerken 4 ist jeweils ein Abtrieb 9 vorgesehen.

Die Balkenschiene 6 ist an einem Ende mit dem die oszillierende Antriebsbewegung des zumindest einen Trennmessers 7 bewirkenden Abtrieb 9 an dem Messerbalken 3 durch eine Antriebsvorrichtung 10 gekoppelt. Vorzugsweise ist die Antriebsvorrichtung 10 an dem Messerbalken 3 zugewandten unteren Ende der Balkenschiene 6 angeordnet. Hierdurch ist der Kraftübertragungsweg zwischen dem Abtrieb 9 über die Antriebsvorrichtung 10 auf die Balkenschiene 6 kurzgehalten.

Der Tragrahmen 5 ist im Wesentlichen dreieckförmig ausgebildet. Der Tragrahmen 5 weist hier und vorzugsweise im Wesentlichen die Form eines rechtwinkligen Dreiecks auf. Der Tragrahmen 5 umfasst ein Rahmensegment 13, welches unter einem Winkel zum Trennmesser 7 geneigt angeordnet ist. Das Rahmensegment 13 erstreckt sich von einem unteren Anlenkpunkt 14 in Richtung eines oberen Befestigungspunktes 15 am Rahmen 2 des Schneidwerks 1. Die Darstellung in Fig. 1 zeigt das Seitenschneidwerk 4 in seiner an dem Schneidwerk 1 arretierten Position. Hierzu ist ein Schnellspannverschluss 16 an dem Tragrahmen 5 angeordnet, welcher mit dem Rahmen 2 des Schneidwerks 1 lösbar verbunden ist. Der Schnellspannverschluss 16 weist einen hakenförmigen Abschnitt 17 auf, welcher mit einer korrespondierenden Ausnehmung 18 im Rahmen 2 in Eingriff bringbar ist. Der Schnellspannverschluss 16 kann als eine Art Kniehebelanordnung ausgeführt sein. Der zur Fixierung des Tragrahmens 5 in die Ausnehmung 18 eingreifende hakenförmige Abschnitt 17 ermöglicht eine spielfreie und drehmomentsteife Verbindung des Tragrahmens 5 am Rahmen 2.

Der Tragrahmen 5 weist einen sich im Wesentlichen in horizontaler Richtung erstreckenden Rahmenabschnitt 19 auf, oberhalb dessen sich die Komponenten der Antriebsvorrichtung 10 befinden. Senkrecht zu dem Rahmenabschnitt 19 erstreckt sich ein weiterer Rahmenabschnitt 20. Das Rahmensegment 13 ist endseitig mit dem Rahmenabschnitt 19 bzw. dem Rahmenabschnitt 20 verbunden. Der Schnellspannverschluss 16 ist an dem sich im Wesentlichen in vertikaler Richtung erstreckenden Rahmenabschnitt 20 in einem oberen Anlenkpunkt 21 angelenkt. Der obere Anlenkpunkt 21 liegt oberhalb des Bereichs, in dem das Rahmensegment 13 endseitig mit dem Rahmenabschnitt 20 verbunden ist.

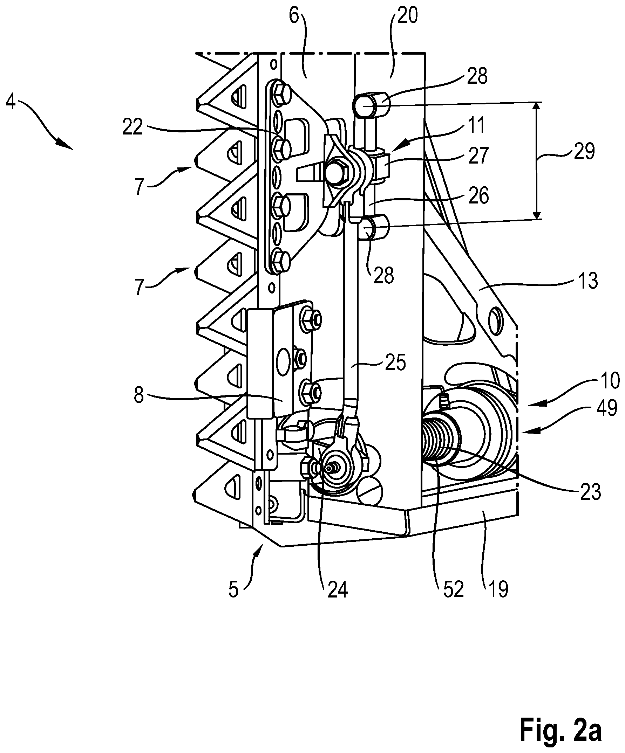

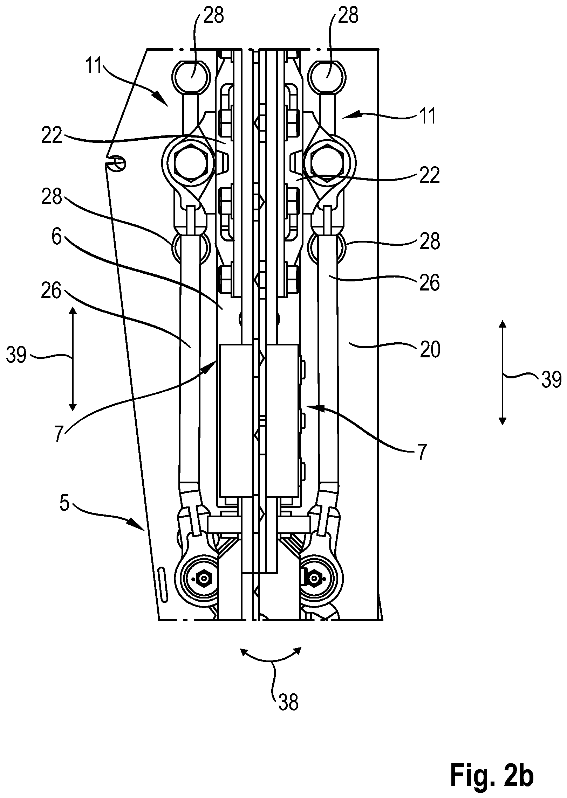

Das Seitenschneidwerk 4 nimmt zumindest ein erstes Lagerungselement 11 (siehe Figur 2) und ein zweites Lagerungselement 12 auf. Das zumindest eine erste Lagerungselement 11 ist dazu eingerichtet, an dem zumindest einen oszillierenden Trennmesser 7 auftretende Kräfte über die Länge der Balkenschiene 6 verteilt aus dieser in den Tragrahmen 5 abzuleiten. Das zumindest eine zweite Lagerungselement 12 ist dazu eingerichtet, die von dem Messerbalken 3 auf das Seitenschneidwerk 4 übertragenen Schwingungen zumindest zu dämpfen.

Der Abtrieb 9 weist eine Abtriebswelle 45 auf, an der endseitig ein erstes Kupplungselement 47 einer ersten Kupplung 46 angeordnet ist. Die Antriebsvorrichtung 10 weist ein korrespondierendes zweites Kupplungselement 48 der ersten Kupplung 46 auf, welches mit dem ersten Kupplungselement 47 in Eingriff bringbar ist. Vorzugsweise weisen das erste Kupplungselement 47 und das zweite Kupplungselement 48 in Umfangsrichtung unter einem Winkel versetzt angeordnete axiale Aussparungen bzw. sich radial nach außen erstreckende Vorsprünge auf. Insbesondere sind die Vorsprünge des ersten Kupplungselements 47 und die Aussparungen des zweiten Kupplungselements 48 unter einem Winkel von etwa 120° zueinander versetzt angeordnet. Somit können die beiden Kupplungselemente 47, 48 der ersten Kupplung 46 nur in einer spezifischen Stellung von Antriebswelle 23 und Abtriebswelle 45 in Eingriff gebracht werden. Die Antriebsvorrichtung 10 weist eine zweite Kupplung 49 auf, die als Überlastkupplung ausgeführt ist. Die zweite Kupplung 49 umfasst ein erstes Kupplungselement 50 und ein zweites Kupplungselement 51, die fluchtend auf einem gemeinsamen Schaft, hier und vorzugsweise der Antriebswelle 23, angeordnet sind. Auf der sich an das zweite Kupplungselement 51 anschließenden Antriebswelle 23 ist eine Druckfeder 52 koaxial angeordnet. Die Druckfeder 52 stützt sich an einem radialen Absatz auf der Antriebswelle 23 sowie an einem Gehäuseabschnitt der zweiten Kupplung 49 ab. Mittels der Druckfeder 52 wird die zweite Kupplung 49 beim Anbau des Seitenschneidwerks 4 vorgespannt.

Die Darstellung in Fig. 2 zeigt schematisch und exemplarisch eine perspektivische Teilansicht eines unteren Bereichs des Tragrahmens 5 des Seitenschneidwerks 4. An einer Antriebswelle 23 der Antriebsvorrichtung 10 ist ein zweiseitiger Hebel 24 angeordnet. An den freien Enden des Hebels 24 sind zwei Koppelstangen 25 beabstandet zueinander und exzentrisch zur Längsachse der Antriebswelle 23 an dem Hebel 24 angelenkt, wobei jedem der oszillierend bewegten Trennmesser 7 eine Koppelstange 25 zugeordnet ist. Am gegenüberliegenden Ende der jeweilige Koppelstange 25 ist ein Übertragungselement 22 angeordnet, welches der Übertragung der oszillierenden Antriebsbewegung auf die Balkenschiene 6 dient. Das zumindest eine erste Lagerungselement 11 ist als eine parallel zur Balkenschiene 6 verlaufende Linearführung ausgeführt. Das Übertragungselement 22 und die Koppelstange 25 werden von dem ersten Lagerungselement 11 in axialer Richtung geführt. Das jeweilige erste Lagerungselement 11 weist eine Führungsstange 26 auf, die achsparallel zu der Balkenschiene 6 angeordnet ist. Entlang der Führungsstange 26 gleiten das Übertragungselement 22 und die Koppelstange 25 in axialer Richtung auf und ab. Hierzu ist ein Führungselement 27 vorgesehen, welches die Führungsstange 26 formschlüssig umschließt. An dem Führungselement 27 ist die Koppelstange 25 an einer zu der Führungsstange 26 senkrecht verlaufenden Achse angelenkt. Die Führungsstange 26 ist an ihren gegenüberliegenden Enden an dem Tragrahmen 5 fixiert. Hierzu umfasst das erste Lagerungselement 11 zwei Befestigungspunkte 28, zwischen denen die Führungsstange 26 angeordnet ist. Die Befestigungspunkte 28 sind in einem Abstand 29 zueinander an dem Tragrahmen 5 angeordnet, wobei der Abstand 29 der Befestigungspunkte 28 zueinander größer als die Amplitude der oszillierenden Bewegung des Trennmessers 7 ist.

Das Seitenschneidwerk 4 gemäß Fig. 2a, b weist zwei als Doppelmesser angeordnete Trennmesser 7 auf, denen jeweils ein erstes Lagerungselement 11 zugeordnet ist. Das jeweilige erste Lagerungselement 11 beschränkt die Anzahl der Freiheitsgrade der damit verbunden Koppelstange 25 und damit des Übertragungselements 22 und der daran angeordneten Balkenschiene 6 auf zwei Translationsfreiheitsgrade.

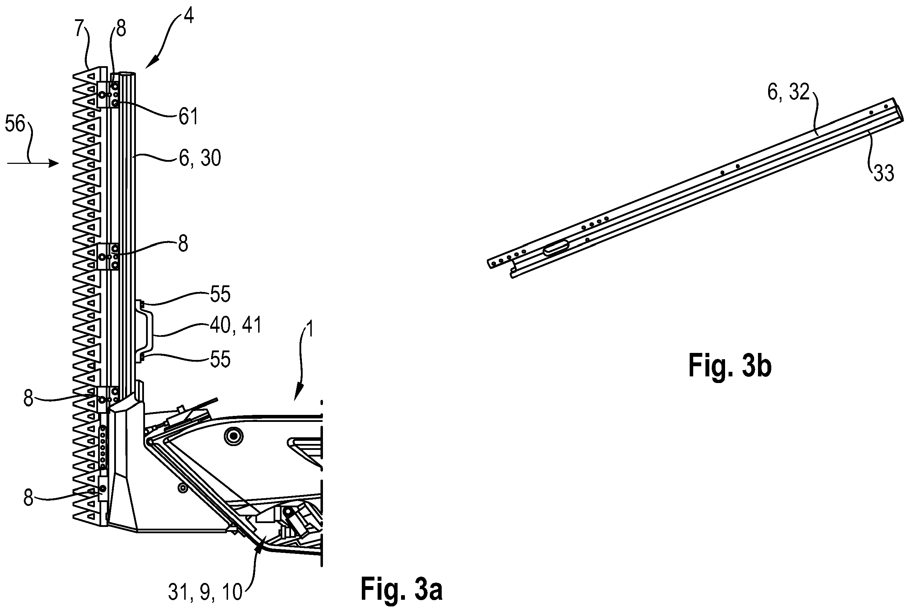

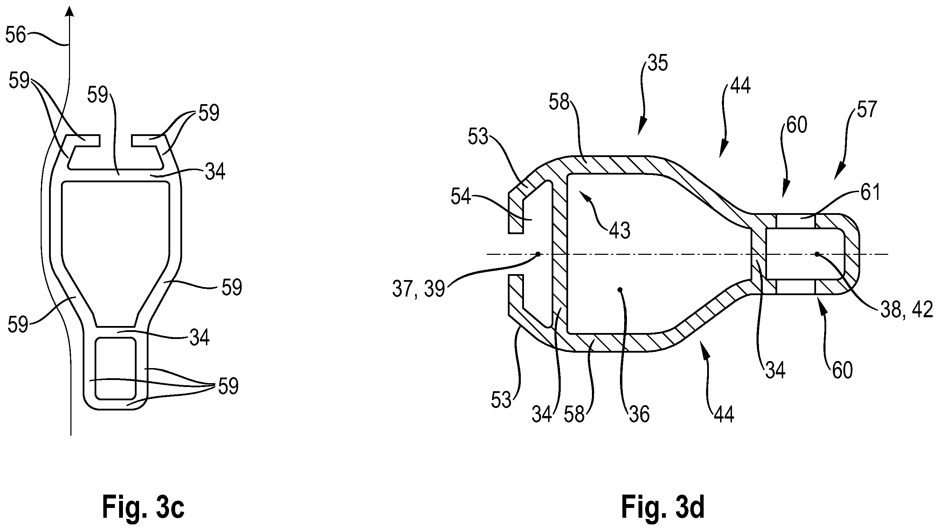

Figur 3 zeigt die erfindungsgemäße Balkenschiene 6 im Detail.

Gemäß den Figuren 3a und b ist das erfindungsgemäße Seitenschneidwerk 4 in der bereits beschriebenen Weise einem Schneidwerk 1 zugeordnet. Die erfindungsgemäße Balkenschiene 6 bildet den Tragrahmen 30 der oszillierend angetriebenen Trennmesser 7, wobei je nach Ausgestaltung des Seitenschneidwerks 4 entweder paarweise angeordnete Trennmesser 7, sogenannte Doppelmesser, oder ein einziges Trennmesser 7 vorgesehen sein können. Die Trennmesser 7 sind mittels Messerhalteeinrichtungen 8 an der Balkenschiene 6 in noch näher zu beschreibender Weise befestigt. In der bereist beschriebenen Weise sind die Trennmesser 7 einenends, hier untenseitig, mit einem die Oszillationsbewegung des zumindest einen oder der paarweise angeordneten Trennmesser bewirkenden Antrieb 31, bestehend aus dem Abtrieb 9 und der Antriebsvorrichtung 10, gekoppelt. Erfindungsgemäß ist die Balkenschiene 6 als einstückiges Profilrohr 32 gestaltet, wobei die einstückige Form vorzugsweise durch Strangpressen erzielt wird, sodass das Profilrohr 32 vorzugsweise als Strangpressprofilrohr 33 ausgebildet ist. Unter Leichtbaugesichtspunkten besteht das Profilrohr 32, insbesondere das Strangpressprofilrohr 33 vorzugsweise aus Aluminium.

In den Figuren 3c und d sind Details des Profilrohrs 32 gezeigt. Im Folgenden wird aus Vereinfachungsgründen nur von Profilrohr 32 gesprochen, wobei hier stets auch die Ausgestaltung als Strangpressprofilrohr 33 miterfasst sein soll. Das Profilrohr 32 umfasst innenseitig Versteifungsstege 34, wobei die Versteifungsstege 34 den Querschnitt 35 des Profilrohrs 32 in einen Mittenbereich 36 und diesem außenseitig zugeordnete erste und zweite Aufnahmebereiche 37, 38 unterteilen. Der erste Aufnahmebereich 37 ist als Führungsschiene 39 ausgebildet. In dieser Führungsschiene 39 kann ein als Griff 41 ausgeführtes Halteelement 40 in seiner Position einstellbaren verschoben und fixiert werden, sodass der Griff 41 jeweils in eine für die Montage und Demontage nutzerabhängig geeignet positioniert werden kann. Der weitere Aufnahmebereich 38 ist in noch näher zu beschreibender Weise als Aufnahme 42 der Messerhalteeinrichtungen 8 ausgebildet.

Der Mittenbereich 36 des Profilrohrs 32 bildet mit zumindest einem der Versteifungsstege 34, etwa dem dem ersten Aufnahmebereich 37 zugeordneten Versteifungssteg 34 eine U-Profilstruktur 43, sodass die Balkenschiene 6 eine hohe Steifigkeit aufweist. Zudem ist der Mittenbereich 36 so beschaffen, dass dieser in Richtung des weiteren Versteifungsstegs 38 in zueinander konvergierende Flanken 44 übergeht. Dies hat insbesondere den Effekt, dass die von diesem Aufnahmebereich weiterzuleitenden Schnittkräfte ohne sprunghafte Umlenkung in die Balkenschiene 6 eingeleitet werden.

Eine kraft- und fertigungsgerechte Struktur des Profilrohres 32 ergibt sich auch dadurch, dass der als Führungsschiene 39 ausgebildete erste Aufnahmebereich 37 des in seiner Position einstellbaren Halteelements 40 im Querschnitt ebenfalls konvergierende Flanken 53 aufweist und in seinem Inneren einen Führungshohlraum 54 zur lageveränderlichen Aufnahme von Verbindungselementen 55 umfasst, wobei dies im einfachsten Fall Schraubenköpfe sind.

Die Konvergenz der jeweils konvergierenden Flanken 44, 53 ist zudem in Gutflussrichtung 56 gerichtet, sodass das Abfließen des Gutes an der Balkenschiene 6 unterstütz wird und zugleich Gutstauungen im Bereich der Balkenschiene vermieden werden.

Der zur Aufnahme der Messerhalteeinrichtungen 8 ausgebildete zweite Aufnahmebereich 38 bildet mit dem ihm benachbarten Versteifungssteg 34 ein Kastenprofil 57 zur Aufnahme der Messerhalteeinrichtungen 8.

Zudem ist die Wandstärke der horizontalen Abschnitte 58 des Mittenbereichs 36 größer als die Wandstärken der übrigen Querschnittsabschnitte 59, wobei die Wandstärke der horizontalen Abschnitte 58 des Mittenbereichs 36 vorzugsweis 4 mm und alle übrigen Wandstärken vorzugsweise 3 mm betragen.

Sind die Trennmesser 7 wie bereits beschrieben als Doppelmesser ausgeführt wird jedes Trennmesser 7 an einer Flanke 60 des die Trennmesser 7 aufnehmenden zweiten Aufnahmebereichs 38 positioniert, indem die jeweiligen Messerhalter 8 mittels Schraubverbindungen 61 am zweiten Aufnahmebereich 38 lösbar befestigt sind.

Das erfindungsgemäße Seitenschneidwerk 4 kann entweder einseitig oder an beiden Seiten eines Schneidwerk positioniert sein, wobei das Schneidwerk wie beschrieben vorzugsweise an einer als Mähdrescher ausgeführten landwirtschaftlichen Erntemaschine eingesetzt wird.

**Bezugszeichenliste**

| | | | |
|---|---|---|---|
| 1 | Schneidwerk | 34 | Versteifungssteg |
| 2 | Rahmen | 35 | Querschnitt |
| 3 | Messerbalken | 36 | Mittenbereich |
| 4 | Seitenschneidwerk | 37 | erster Aufnahmebereich |
| 5 | Tragrahmen | 38 | zweiter Aufnahmebereich |
| 6 | Balkenschiene | 39 | Führungsschiene |
| 7 | Trennmesser | 40 | Halteelement |
| 8 | Messerhalteeinrichtung | 41 | Griff |
| 9 | Abtrieb | 42 | Aufnahme |
| 10 | Antriebsvorrichtung | 43 | U-Profil-Struktur |
| 11 | erstes Lagerungselement | 44 | konvergierende Flanke |
| 12 | zweites Lagerungselement | 45 | Abtriebswelle |
| 13 | Rahmensegment | 46 | erste Kupplung |
| 14 | Anlenkpunkt | 47 | erstes Kupplungselement |
| 15 | Befestigungspunkt | 48 | zweites Kupplungselement |
| 16 | Schnellspannvorrichtung | 49 | zweite Kupplung |
| 17 | Hakenförmiger Abschnitt | 50 | erstes Kupplungselement |
| 18 | Ausnehmung | 51 | zweites Kupplungselement |
| 19 | Rahmenabschnitt | 52 | Druckfeder |
| 20 | Rahmenabschnitt | 53 | konvergierende Flanke |
| 21 | Anlenkpunkt | 54 | Führungshohlraum |
| 22 | Übertragungselement | 55 | Verbindungselemente |
| 23 | Antriebswelle | 56 | Gutflussrichtung |
| 24 | Hebel | 57 | Kastenprofil |
| 25 | Koppelstange | 58 | Horizontale Abschnitte |
| 26 | Führungsstange | 59 | Übrige Querschnittsabschnitte |
| 27 | Führungselement | 60 | Flanke |
| 28 | Befestigungspunkt | 61 | Schraubverbindung |
| 29 | Abstand | | |
| 30 | Tragrahmen | | |
| 31 | Antrieb | | |
| 32 | einstückiges Profilrohr | | |
| 33 | Strangpressprofilrohr | | |

## Patentansprüche

1. Seitenschneidwerk eines Schneidwerks einer landwirtschaftlichen Erntemaschine, zumindest umfassend einen als Balkenschiene ausgeführten Tragrahmen, wobei die Balkenschiene in Längsrichtung zumindest ein oszillierendes Trennmesser mittels Messerhalteeinrichtungen abstützt und einendes mit einem die Oszillationsbewegung des zumindest einen Trennmessers bewirkenden Antrieb gekoppelt ist,
**dadurch gekennzeichnet,**
**dass** die Balkenschiene (6) als einstückiges Profilrohr (32), insbesondere Strangpressprofilrohr (33), ausgebildet ist
wobei das Profilrohr (32, 33) innenseitig Versteifungsstege (34) umfasst und die Versteifungsstege (34) den Querschnitt (35) des Profilrohrs (32, 33) in einen Mittenbereich (36) und diesem außenseitig zugeordnete Aufnahmebereiche (37, 38) unterteilen..

2. Seitenschneidwerk nach Anspruch 1,
**dadurch gekennzeichnet,**
**dass** der eine Aufnahmebereich (37) als Führungsschiene (39) eines in seiner Position einstellbaren Halteelements (40), vorzugsweise eines Griffs (41), und der weitere Aufnahmebereich (38) als Aufnahme der Messerhalteeinrichtungen (8) ausgebildet sind.

3. Seitenschneidwerk nach einem der vorhergehenden Ansprüche,
**dadurch gekennzeichnet,**
**dass** der Mittenbereich (36) des Profilrohrs (32, 33) mit einem der Versteifungsstege (34) eine U-Profilstruktur (43) bildet und in Richtung des weiteren Versteifungsstegs (34) in zueinander konvergierende Flanken (44) übergeht.

4. Seitenschneidwerk nach einem der vorhergehenden Ansprüche,
**dadurch gekennzeichnet,**
**dass** der als Führungsschiene (39) ausgebildete Aufnahmebereich (37) eines in seiner Position einstellbaren Halteelements (40) im Querschnitt konvergierende Flanken (53) aufweist und in seinem Inneren einen Führungshohlraum (54) zur lageveränderlichen Aufnahme von Verbindungselementen (55) umfasst.

5. Seitenschneidwerk nach einem der Ansprüche 3 und 4,
**dadurch gekennzeichnet,**
**dass** die Konvergenz der jeweils konvergierenden Flanken (44, 53) in Gutflussrichtung (56) gerichtet ist.

6. Seitenschneidwerk nach einem der vorhergehenden Ansprüche,
**dadurch gekennzeichnet,**
**dass** der als Aufnahme der Messerhalteeinrichtungen (8) ausgebildete Aufnahmebereich (38) mit dem ihm benachbarten Versteifungssteg (34) ein Kastenprofil (57) zur Aufnahme der Messerhalteeinrichtungen (8) bildet.

7. Seitenschneidwerk nach einem der vorhergehenden Ansprüche,
**dadurch gekennzeichnet,**
**dass** die als einstückiges Profilrohr (32), insbesondere Strangpressprofilrohr (33), ausgebildet Balkenschiene (6) aus Aluminium besteht.

8. Seitenschneidwerk nach Anspruch 7,
**dadurch gekennzeichnet,**
**dass** die Wandstärke der horizontalen Abschnitte (58) des Mittenbereichs (36) größer als die Wandstärken der übrigen Querschnittsabschnitte (59) ist, wobei die Wandstärke der horizontalen Abschnitte (58) des Mittenbereichs (36) vorzugsweis 4 mm und alle übrigen Wandstärken vorzugsweise 3 mm betragen.

9. Seitenschneidwerk nach einem der vorhergehenden Ansprüche,
**dadurch gekennzeichnet,**
**dass** das Trennmesser (7) als Doppelmesser ausgebildet ist und jedes der Doppelmesser an einer Flanke des die Trennmesser (7) aufnehmenden Aufnahmebereichs (38) positioniert ist.

10. Verwendung eines Seitenschneidwerks (4) nach einem der Ansprüche 1 bis 9 in einem als Schneidwerk (1), wobei ein oder beide Seitenbereiche des Schneidwerks (1) ein Seitenschneidwerk (4) aufnehmen.

11. Verwendung eines Seitenschneidwerks nach Anspruch 10,
**dadurch gekennzeichnet,**
**dass** das Schneidwerk (1) einer als Mähdrescher ausgeführten landwirtschaftlichen Erntemaschine zugeordnet ist.

## Claims

1. Side header forming part of a header of an agricultural harvester, at least comprising a supporting frame designed in the form of a bar rail, wherein the bar rail supports at least one oscillating cutting blade in the longitudinal direction by means of blade-holding devices and, at one end, is coupled to a drive which gives rise to the oscillation movement of the at least one cutting blade,
**characterized**
**in that** the bar rail (6) is in the form of a single-piece profile tube (32), in particular an extruded profile tube (33),
wherein the profile tube (32, 33) comprises stiffening crosspieces (34) on the inside and the stiffening crosspieces (34) subdivide the cross section (35) of the profile tube (32, 33) into a central region (36) and receiving regions (37, 38) assigned thereto on the outside.

2. Side header according to Claim 1,
**characterized**
**in that** the one receiving region (37) is in the form of a guide rail (39) of an adjustable-position holding element (40), preferably a handle (41), and the further receiving region (38) is in the form of a mount for the blade-holding devices (8).

3. Side header according to either of the preceding claims, **characterized**
**in that** the central region (36) of the profile tube (32, 33) forms a U-profile structure (43) with one of the stiffening crosspieces (34) and merges in the direction of the other stiffening crosspiece (34) by way of converging flanks (44).

4. Side header according to either of the preceding claims, **characterized**
**in that** the receiving region (37) for an adjustable-position holding element (40), this receiving region being in the form of a guide rail (39), has cross-sectionally converging flanks (53) and, in its interior, comprises a guide cavity (54) for receiving connecting elements (55) in alterable positions.

5. Side header according to either of Claims 3 and 4,
**characterized**
**in that** the convergence of the respectively converging flanks (44, 53) is directed in the material-flow direction (56).

6. Side header according to either of the preceding claims, **characterized**
**in that** the receiving region (38) in the form of a mount for the blade-holding devices (8) forms, with the adjacent stiffening crosspiece (34), a box profile (57) for receiving the blade-holding devices (8).

7. Side header according to either of the preceding claims, **characterized**
**in that** the bar rail (6), which is in the form of a single-piece profile tube (32), in particular an extruded profile tube (33), consists of aluminium.

8. Side header according to Claim 7,
**characterized**
**in that** the wall thickness of the horizontal portions (58) of the central region (36) is greater than the wall thicknesses of the rest of the cross-sectional portions (59), wherein the wall thickness of the horizontal portions (58) of the central region (36) is preferably 4 mm and all the other wall thicknesses are preferably 3 mm.

9. Side header according to either of the preceding claims, **characterized**
**in that** the cutting blade (7) is in the form of a double blade and each of the double blades is positioned on a flank of the receiving region (38) which receives the cutting blades (7).

10. Use of a side header (4) according to any one of Claims 1 to 9 in a header (1), wherein one or both side regions of the header (1) receive a side header (4).

11. Use of a side header according to Claim 10,
**characterized**
**in that** the header (1) is assigned to an agricultural harvester designed in the form of a combine harvester.

## Revendications

1. Mécanisme de coupe latéral d'un tablier de coupe d'une machine de récolte agricole, comprenant au moins un châssis de support réalisé sous forme de barre-glissière, la barre-glissière soutenant, dans la direction longitudinale, au moins une lame de coupe oscillante, au moyen de dispositifs de support de lame, et étant couplée par une extrémité à un moyen d'entraînement produisant le mouvement oscillant de la lame de coupe, au nombre d'au moins une,
**caractérisé en ce que**
la barre-glissière (6) est réalisée sous forme de tube profilé (32) monobloc, en particulier de tube profilé extrudé (33),
le tube profilé (32, 33) comportant des cloisons de raidissement (34) sur sa face interne, et les cloisons de raidissement (34) divisant la section transversale (35) du tube profilé (32, 33) en une partie centrale (36) et des parties logements (37, 38) associées à celle-ci côté extérieur.

2. Mécanisme de coupe latéral selon la revendication 1,
**caractérisé en ce que**
l'une des parties logements (37) est réalisée sous forme de glissière de guidage (39) d'un élément de préhension (40) à position réglable, de préférence d'une poignée (41), et l'autre partie logement (38) est réalisée sous forme de logement pour les dispositifs porte-lame (8).

3. Mécanisme de coupe latéral selon une des revendications précédentes,
**caractérisé en ce que**
la partie centrale (36) du tube profilé (32, 33) forme avec l'une des cloisons de raidissement (34) une structure profilée en U (43) et se raccorde à des flancs (44) mutuellement convergents en direction de l'autre cloison de raidissement (34).

4. Mécanisme de coupe latéral selon une des revendications précédentes,
**caractérisé en ce que**
la partie logement (37) d'un élément de préhension (40) à position réglable qui est réalisée sous forme de glissière de guidage (39) présente des flancs (53) convergents en section transversale et comporte à l'intérieur une cavité de guidage (54) destinée à accueillir des éléments d'assemblage (55), avec possibilité de changement de position.

5. Mécanisme de coupe latéral selon une des revendications 3 et 4,
**caractérisé en ce que**
la convergence des flancs (44, 53) respectivement convergents est orientée dans le sens de l'écoulement des produits.

6. Mécanisme de coupe latéral selon une des revendications précédentes,
**caractérisé en ce que**
la partie logement (38) réalisée comme logement pour les dispositifs porte-lame (8) forme avec sa cloison de raidissement (34) adjacente un profilé en caisson (57) destiné à accueillir les dispositifs porte-lame (8).

7. Mécanisme de coupe latéral selon une des revendications précédentes,
**caractérisé en ce que**
la barre-glissière (6) réalisée sous forme de tube profilé (32, 33) monobloc, en particulier de tube profilé extrudé (33), est en aluminium.

8. Mécanisme de coupe latéral selon la revendication 7,
**caractérisé en ce que**
l'épaisseur de paroi des portions horizontales (58) de la partie centrale (36) est plus grande que l'épaisseur de paroi des autres portions de section transversale (59), l'épaisseur de paroi des portions horizontales (58) de la partie centrale (36) étant de préférence de 4 mm, et toutes les autres épaisseurs de paroi étant de préférence de 3 mm.

9. Mécanisme de coupe latéral selon une des revendications précédentes,
**caractérisé en ce que**
la lame (7) est réalisée sous forme de double lame, et chacune des doubles lames est positionnée sur un flanc de la partie logement (38) accueillant les lames (7).

10. Utilisation d'un mécanisme de coupe latéral (4) selon une des revendications 1 à 9, où une partie latérale ou les deux parties latérales du mécanisme de coupe (1) accueille(nt) un mécanisme de coupe latéral (4).

11. Utilisation d'un mécanisme de coupe latéral selon la revendication 10,
**caractérisée en ce que**
le tablier de coupe (1) est associé à une machine de récolte agricole réalisée comme moissonneuse-batteuse.
